# EUROPEAN PATENT APPLICATION

(11) **EP 4 708 763 A1**
(43) Date of publication of application: **11.03.2026**
(21) Application number: 24306437.5
(22) Date of filing: 04.09.2024
(51) Int. Cl.: H04L 9/08, G06F 21/53

(54) **OBJECT MANAGEMENT USING PASSWORD SHARES IN AN HSM**

(71) Applicant: THALES DIS CPL USA, INC., Austin, TX 78759 (US)
(72) Inventor: ARIF, Mohammad, 226002 Telibagh Lucknow (IN); TEWARI, Devesh Kumar, 201301 Noida (IN); UPADHYAY, Abhay, 201310 Noida (IN)
(74) Representative: Grevin, Emmanuel

(57) **Abstract**

Provided is an HSM (10) and methods (400, 450) for object management using an identifiable way to login into a partition (74) using unique password shares (S1, S2). The partition (CO or CU) password is split into multiple shares using Shamir's secret sharing algorithm in 2-of-n fashion, such that any two shares will suffice to reconstruct the partition (CO or CU) password. One share will remain with HSM at the device, and other shares are provided to the applications. The password shares are utilized to create application specific tags, that can be set as an attribute of object. A share data includes a password share and the tag, which is provided to the application for logging into the HSM via PKCS #11 commands. Each application will use its password share to create a session with partition. Object manipulation can be managed as per object tagging, such that applications have access only to their application objects. Other embodiments provided.

## Description

### TECHNICAL FIELD

The present invention relates generally to cryptographic devices, and more particularly, to a Hardware Security Module (HSM) with improved security performance and access to managing objects thereon and associated session management of multi-tenant applications using those objects.

### BACKGROUND

A Hardware Security Module (HSM) serves as a trust anchor to create hardened, tamper-resistant environments for storing cryptographic keys. These devices are also referred to as tokens, slots or partitions, and generally perform two types of functions: storage of cryptographic objects such as secret keys, certificates and data, and performing cryptographic operations on those objects, for example, asymmetric key pair generation, symmetric key generation, hashing, encryption, decryption and signing.

Applications communicate with the HSM over one or more PKCS#11 sessions, which provide a logical connection between the application and the HSM. PKCS#11 defines a standard Applications Programming Interface (API) for accessing theses cryptographic objects and performing the cryptographic operations on the HSM, also called a token device. In accordance with HSM policies, each application needs to be authenticated in order to access these objects on the HSM. To this point, the PKCS#11 library supports login administration of users for authentication purposes and ensuring access control of the objects.

After an application opens an authenticated session, it has complete access to the objects stored on the HSM. This includes access to objects created by other authenticated application sessions. This leads to object management concerns since authenticated applications can manipulate all objects in the HSM. Any application once authenticated can read, update and delete any object whether it is generated by that particular application or another application.

Currently this concern is addressed by using application specific token means, where each application has their own token device; that is, each application is assigned its own dedicated HSM. This however is costly, and presents a problem when the HSM is shared with multiple applications, for example, in a cloud HSM environment, where each of those other applications could access, and possibly compromise, the objects stored in the same HSM. In this context, there is no clear current mechanism for securing the objects against the other authenticated applications. This is because, in part, the PKCS #11 Cryptographic Token Interface (Cryptoki) object management utilities do not distinguish application specific objects. The PKCS #11 standard provides only for token object management. Consequently, any application authenticated to the Token is fully authorized to manage all objects available on the Token.

Although a contemplated solution could be achieved by specifying a vendor-defined attributes, this approach faces the following two challenges. First, every application that supports PKCS#11 standards would need to be modified to find objects based on an extra attribute. Secondly, the Cryptoki library would need to be re-developed for the searching of token objects based on vendor-defined attribute. Accordingly, there is a need for improved authentication and access control of PKCS#11 objects on an HSM, and managing accessibility of these objects in a multi-application multi-session environment. Moreover, from a practical perspective to overcome the above mentioned challenges, a preferable approach would need to implement object management and access control in a way that does not affect existing applications, and furthermore, without modifying the PKCS#11 standard.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a method suitable for configuring a Hardware Security Module (HSM) (10) with logical separation of a same physical partition is provided for multiple applications and managing application objects using password shares. In a Share Generation (400), by way of a Partition Manager (60), the method includes creating a partition in memory responsive to receiving an partition password used by a PKCS 11 standard for authenticating applications to execute in the HSM; setting access to the partition according to the partition password; and by way of a Share Management System (SMS) (70) communicatively coupled to the Partition Manager, generating Share Data (91) for the applications by: splitting the partition (CO or CU) password into multiple shares using Shamir's Secret Sharing algorithm. This includes storing one share of the multiple shares as a local share on the HSM; generating tags for other shares of the multiple shares; concatenating and encoding a tag and a share per application to produce Share Data specific to each application; and distributing each Share Data to each of the applications.

In Share Validation (450), by way of the Share Management System (SMS) (70), the method includes: decoding the Share Data for an application into an application tag and an application share; reconstructing the partition password from the application share and local share stored on the HSM; logging into the partition using the partition password; creating an authenticated session for the application;setting the application tag for application objects created in memory by the application; providing authorized applications with access only to application objects with their corresponding application tag, and restricting access to application objects in the partition with different application tags of different authenticated applications also accessing the same partition, wherein a partition password is a Crypto Officer (CO) or Crypto User (CU) password required by the PKCS#11 standard in order to authenticate the CO or CU to the partition.

In some embodiments the application tag is saved as an attribute of the application object when stored in memory, and, wherein the application object is one among a data object, a key object, a certificate object or vendor-defined object.

In some embodiments, responsive to a create object command from an application, the Partition Manager creates the application object in the partition, and the SMS sets an application tag as an attribute of the application object; and responsive to a read object command from the application, the SMS checks the application object has the attribute corresponding to the application tag set for the authenticated session of the application.

In some embodiments Shamir's Secret Sharing algorithm is "M of N" where M is the number of applications so that each application will have its own share, and N is at least two so that any one application share and the local share can reconstruct the partition password.

In some embodiments the encoding of a tag and a share per application is a mapping operation that computes a hash of the application share, and concatenates the hash with the application tag. In some embodiments the encoding of a tag and a share per application is enforced by a cryptographic binding operation.

In other embodiments one or more devices, such as an HSM, or token device, implements one or more methods above, alone or in combination, in sequence or other order, for configuring a Hardware Security Module (HSM) (10) with logical separation of a same physical partition for multiple applications and managing application objects using password shares.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG.** 1 depicts an exemplary communication environment for configuring and operating a next generation Hardware Security Module (HSM) in accordance with some embodiments;
**FIG. 2A** illustrates a partition management approach using a same password for each application on a multi-tenant HSM resulting in full object access for each and every application;
**FIG. 2B** illustrates a Share Management System (SMS) approach using an application-specific password share and corresponding tag on a multi-tenant HSM resulting in intentionally limited object access per application in accordance with some embodiments;
**FIG. 3A** depicts an exemplary method for Share Generation by way of the SMS of **FIG. 2B** in accordance with some embodiments;
**FIG. 3B** depicts an exemplary method for Share Validation by way of the SMS of **FIG. 2B** in accordance with some embodiments;
**FIG. 4A** is a sequence diagram for the Share Generation and distribution process of application-specific password share and corresponding tag in accordance with some embodiments;
**FIG. 4B** is a sequence diagram for object management with application-specific password share and corresponding tag in accordance with some embodiments;
**FIG. 5A** is a workflow diagram for Password Share and Tag Generation of a method for cryptographic binding between an application share and corresponding tag in accordance with some embodiments;
**FIG. 5B** is a workflow diagram for Share Validation and Object Tagging of the method of cryptographic binding of **FIG 5A** between an application share and corresponding tag in accordance with some embodiments;
**FIG. 6** is a workflow diagram of another method for cryptographic binding between an application share and corresponding tag based on HMAC in accordance with some embodiments;
**FIG. 7** depicts an exemplary diagrammatic representation of a machine and hardware platform suitable for use as an HSM to perform the methods in accordance with some embodiments.

Specific embodiments in this invention have been shown by way of example in the foregoing drawings and are hereinafter described in detail. The figures and written description are not intended to limit the scope of the inventive concepts in any manner.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Embodiments of the invention described herein resolve problems related to the accessibility of PKCS#11 token objects by authenticated applications, and provides an innovative approach to securing these token objects on an HSM by way of password sharing.

In the context of the present description, an HSM is a hardened, tamper-resistant hardware device that secure cryptographic processes by generating, protecting, and managing keys used for encrypting and decrypting data and creating digital signatures and certificates. It is a tamper and intrusion-resistant, highly-trusted physical device whose primary purpose is to conceal and protect cryptographic data and prevent compromise of private keys used on the data responsive to attacks, which are generally classified in two categories; hardware and software attacks. If a security breach due to an attack is detected, a tamper event occurs and the HSM becomes locked until the tamper is cleared by the appropriate authority, or the HSM is reset.

The PKCS#11 Cryptographic Token Interface Standard, also known as Cryptoki, is one of the Public Key Cryptography Standards. PKCS#11 defines the interface between an application and a cryptographic device, such as an HSM. PKCS#11 is used as a low-level interface to perform cryptographic operations in the HSM without the need for the application to directly interface a device through its driver. PKCS#11 represents cryptographic devices using a common model referred to simply as a token. An application can therefore perform cryptographic operations on any device or token, using the same independent command set.

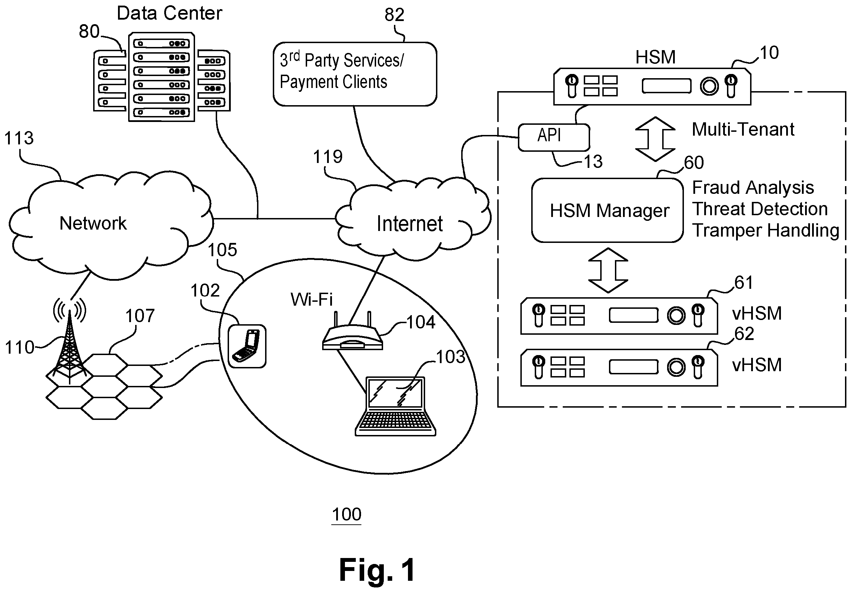

**FIG. 1** depicts an exemplary communication environment **100** for configuring, managing and operating a next generation HSM **10.** The HSM **10** may also reside in a networked data center **80** for providing cloud HSM services. As a "cloud HSM" it provides the same functionality as on-premise HSMs with the benefits of a cloud service deployment, but without the need to host and maintain on premises appliances. In other arrangements, it may be a "hosted HSM" physically hosted by a computing service provider, for example providing client based applications that run on the HSM. A typical HSM deployment can provide for Software as a Service (SaaS), Platform as a Service (PaaS), or Infrastructure as a Service (laaS) models. In other arrangements, the HSM **10** may be deployed in a Hardware-as-a-Service model (HaaS) where it is shared by multiple customers, for instance, supported by 3^{rd} party services providing client applications **82** that run on the HSM via an Applications Programming Interface (API) **13** to process cryptographic commands thereon.

The HSM **10** may also form part of a cluster managed by a single server application used by various services and applications. These cloud-based and network-attached HSMs can be used by a large number of clients/tenants and thus need to have the capability of allowing for multi-tenancy. Multi-tenancy is an architecture in which a single instance of a software application serves multiple customers. Multi-tenant HSM architectures are popular since they provide robust performance, dedicated security configurations, with easy and fast integration to meet cryptographic demands on the HSM. Accordingly, in a Hardware-as-a-Service model where a single HSM is shared by multiple customers, a partitioned system is provided under direction of the HSM Partition Manager **60.** Here, tenant and partition are intertwined in that each tenant is assigned their own partition. Among other functions, the HSM Partition Manager **60** provides local and remote management features tailored to the HSM **10,** and in other configurations provides remote HSM operation and administration through a standard browser interface.

The HSM Partition Manager **60** is also responsible for instantiating one or more virtual HSMs **61/62.** The HSM **10** is designed to support these virtualized HSM instances using virtualization technologies such as containers or micro VMs. The HSM Partition Manager **60** service via API **13** can serve to configure, manage and orchestrate these virtual HSM instances **61/62** on the HSM **10** specific to each tenant and their corresponding applications. Each virtualized HSM instance **61/62** is a virtual HSM (vHSM) service running services logic, and can each be referred to as a "vHSM" instance to service cryptographic requests for the applications executing on the HSM. By way of the HSM Partition Manager services **60,** each vHSM instance is provided with a necessary master key and settings and necessary certificates (e.g. x509) for secure communications and for creating an authenticated sessions with an application. For example, client applications can send crypto commands via API **13** to the desired "vHSM" instances **61/62** over TCP/TLS connections directly or via 3^{rd} party services. These virtualized HSM instance are individually configured per tenant when the HSM operates as a multi tenant crypto provider service, for example, under an HaaS model and can execute numerous applications per tenant at the same time.

The communication environment **100** can further include a telecommunication network **113** and an internet communication network (Internet) **120.** The telecommunication network **113** can provide a mobile communication link via base receiver **110** for wireless connectivity of a mobile device **102** from one or more cells **107.** In one arrangement, the mobile device **102** can communicate over a Radio Frequency (RF) link with the base receiver **110** using a standard communication protocol such as legacy 2G (CDMA, GSM) and 3G, or LTE 4G and 5G. The base receiver **110,** in turn, can connect the mobile device **102** to the Internet **120** over a packet switched link. The internet can support application services and application service layers for providing media or content to the mobile device **102.** By way of the communication environment **100,** the mobile device **102** can establish connections with a server/service **82** on the network and with other mobile devices for exchanging information or providing services such as audio, text messaging, media, audio, video, interactive applications, and the like. The server can have access to a database that is stored locally or remotely and which can contain profile data. The server can also host application services directly, or over the Internet **119.**

The mobile device **102** can also connect to the Internet over a Wi-Fi or WLAN 105. Wireless Local Access Networks (WLANs) provide wireless access to the mobile communication environment within a local geographical area. WLANs can also complement loading on a cellular system, so as to increase capacity. Wi-Fi is the wireless technology used to connect computers, tablets, smartphones and other devices to the internet. Wi-Fi is the radio signal sent from a wireless router to a nearby device, which translates the signal into data for the user of the mobile device **102.** Wi-Fi is a family of wireless network protocols, based on the IEEE 802.11 family of standards, which are commonly used for local area networking of devices. WLANs are typically composed of a cluster of Access Points (APs) **104** also known as base stations. The mobile communication device **102** can communicate with other WLAN stations such as a laptop **103** within the base station area **105.** In typical WLAN implementations, the physical layer uses a variety of technologies such as IEEE 802.11 technologies. The physical layer may use infrared, frequency hopping spread spectrum in the 2.4 GHz or 5GHz Band, or sequence spread spectrum. The mobile device **102** can send and receive data to a server or other remote servers on the mobile communication environment. In one example, the mobile device **102** can send and receive audio, video, or other multimedia content from the database through the server **130.**

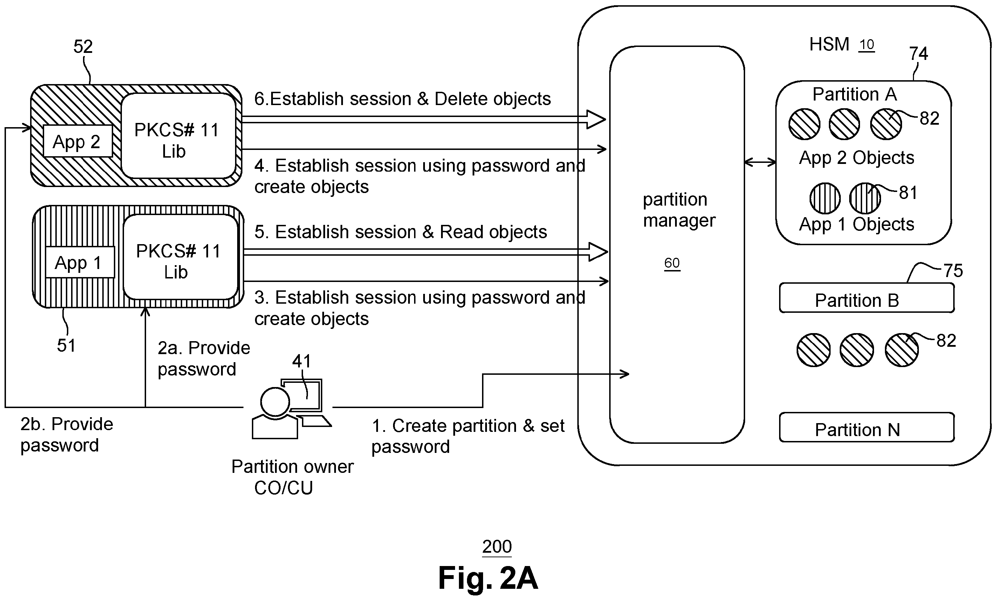

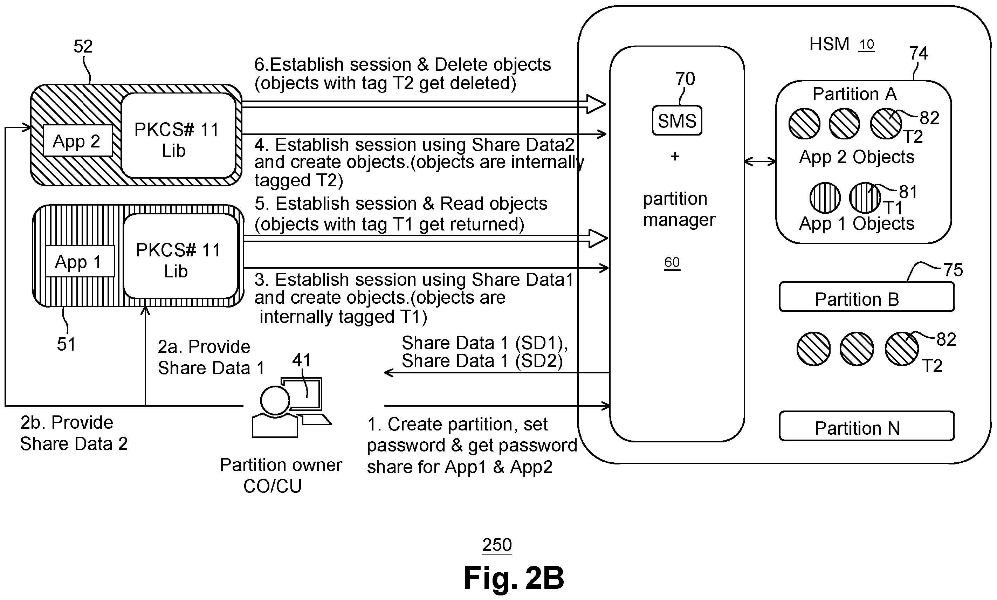

**FIG. 2A** diagrammatically illustrates a multi-tenant HSM architecture **200** with a partition management system that uses a same password for each application, which results in full object access for each and every authenticated application as explained in the background section. This diagram **200** is the baseline for appreciating the inventive portions related to PKCS#11 and password use, discussed ahead in FIG. 2B, and shows specific steps 1-6 textually describing how the same password is used. As shown, for instance, both App 1 and App 2 ultimately establish (steps 3,4) their own individual sessions with the partition manager **60** to create object using the same password that was provided (steps 2a, 2b) to them from the Partition Owner, which is either a Crypto Officer (CO) or Crypto User (CU) after they created the partition and set that password (step 1). Notably, once each app establishes its own independent session with that same password, and thereafter, can access objects, for example, read, write, delete, as shown in steps 5 and 6.

Briefly, the Partition Manager **60** allocates memory on the HSM **10** into respective partitions, for example, in non-volatile memory sections of the HSM or on hard discs. A partition is a secure, independent, protected area in the HSM where sensitive objects can be stored, for example, cryptographic keys, certificates, or access passwords. Each partition has its own data, access controls, security policies, and separate administration access. HSM partitions are independent logical HSMs that reside within the HSM. A tenant is a guest system running software in a partition. Once a partition is configured, tenants can be allocated to that partition, though those tenants have no hardware resources (CPU or memory) until assigned by the Partition Manager **70.** Once assigned, individual client applications via PKCS#11 API receive single-tenant access to the HSM, which in a multi-tenant configuration can service multiple customers each with their own applications.

Here two partitions are shown. Partition A **(74)** contains objects **81/82** used by both Application 1 **(51)** and Application 2 **(52).** Partition B **(75)** contains objects **82** used only by Application 2. A graphic fill pattern is illustrated to show which (token) objects belong to which applications. For example, vertical bar fill is for App 1 objects **81;** diagonal bar fill is for App 2 objects **82.** By way of the PKCS#11 interface, each of Application 1 **(51)** or 2 **(52)** communicates with the partition manager **70** to access the data objects. Here, it should also be noted, that only the Crypto Officer (CO) or the Crypto User (CU) **41** that created the partition and set the password can access the token objects **81/82** after authentication, either by login, password, or Pin Entry Device (PED). To establish an authenticated session, the application needs to login (as a CO or CU) to the partition. When an authenticated session is established after providing the administrative password, then the application can access all the objects stored in the HSM partition. Each application **51/52** once authenticated is given complete access, for example, to token objects **81/82** in partition **74.** Thus any authenticated application can read, update and delete any object whether it is generated by that particular application or not.

From this diagram **200,** it can be seen that both Application 1 and Application 2 are able to access (e.g. read, write, delete, etc.) the data objects **81/82** of the respective applications **51/52** in Partition A **(74),** which as described in the background section above, is a concerning problem. This is because, as seen in steps 1 to 6, both applications use the same password, and access the partition manager **70** using that same password. So each application can effectively see all the objects in the partition that they generated, and also all the objects, all the other applications generated. The issue here is the indiscriminate accessibility of all token objects by an, or any, authenticated application as previously described.

**FIG. 2B** illustrates a multi-tenant HSM architecture **250** with a Share Management System (SMS) **70** that overcomes this problem by using an application-specific password share and corresponding tag for each application. With this approach, the multi-tenant HSM by way of the SMS **70** intentionally limits object access per application. This resolves the aforementioned architectural problem of FIG 2A in a very unique way *without* affecting either, or any other, existing application and *without* manipulating the original PKCS#11 standard required by either, or any other, application. Briefly, a visual comparison the pictorial diagrams of FIG. 2A and FIG. 2B reveals that, the steps (1-6) are essentially ordered the same, but the actual "password" in FIG 2A has been replaced by a "password share" textually referenced as "Share Data 1" or "Share Data 2". This password share is created in part via Shamir's Secret Sharing algorithm. However, each Share Data (1/2) is not merely a password share; it is a function (concatenate and encode) of a password share and a generated application tag as described ahead in further detail.

Here, the Share Management System (SMS) **70** provides an identifiable way for an individual application to log into the HSM using a unique password share. Notably, the password share for each application is not the actual CO or CU password required by the PKCS#11 standard, but rather a password share generated by splitting the CO or CU password into multiple shares using Shamir's Secret Sharing (SSS) algorithm. The password is split in 2-of-n fashion, or an M of N, such that any M=2 shares (e.g. S0, S1, S2; n=3) will suffice to reconstruct the password. One share (S0) will remain with SMS at the HSM, and each application **51/52** will be provided its own different application-specific share (S1, S2) that belongs to that particular application only. By way of the Partition Manager **60** and SMS **70,** each application **51/52** will use its password share to create a communication session with its assigned partition **74/75,** and notably, without any modification to PKCS#11. As a result of the application-specific tagging, each application will have access only to its application objects. From the application developer's perspective the PKCS#11 interface is unchanged. Password shares (e.g. S1, S2) will be utilized to reconstruct the CO/CU password and application specific tag (e.g. T1, T2), that can be set as an attribute of a respective application object **81/82.** Thereafter, object manipulation can be managed as per object tagging. The tag is used to recognize the application, and then identify the corresponding objects. So, tagged applications can only see and manipulate objects associated with that application according to their corresponding tag.

Briefly, Shamir's Secret Sharing Scheme is a way of splitting a secret value S into a number (n) of pieces (or shares) in such a way that any combination of k (of n) pieces can be used to recover S, but any k-1 or fewer pieces provide no information about S. Here the secret S is the actual password (in clear or encoded form) set by the CO/CU. Shamir's scheme relies on a clever and useful property of polynomials whereby a polynomial of degree D is uniquely defined by D+1 points. The details of the scheme are beyond the scope of this specification, but the relevant part here is that this degree property of the polynomial approach allows the number of shares to be adjusted as needed without recalculation. A higher number makes the secret more secure, though harder to reconstruct, while a lower number makes it more accessible. Here, in the example shown, there are three password shares (n=3) because there are 2 applications **51/52** that will each require their own password share, and the SMS **70** will require its own password share that it will store locally on the HSM **10;** hence 3 shares. The chosen threshold (2-of-3) ensures each individual application **(51** or **52)** and the SMS **70** can together reconstruct the password required for PKCS#11 authentication. Understandably, as more applications access the HSM the number of password shares can be increased without recalculation of the polynomial, and without affecting the chosen threshold.

With reference still to FIG. 2B, at step 1, the partition owner (PO) creates a partition and sets partition user (CO or CU) password in the usual fashion from their perspective. Within the HSM however, by way of the Partition Manager **60** and SMS **70,** password shares for App 1 **(51)** and App 2 **(52)** are generated, respectively, labeled "Share Data 1" (SD1) and "Share Data 2" (SD2). As mentioned above, each Share Data (1/2) is not merely a password share; it is a function (concatenate and encode) of a password share and a generated tag as described ahead. The physical partition may be labelled and identified using this partition ID. As one example, hard drive partitions on Linux systems rely on a UUID (universally unique identifier) for unique labels. In some environments, a command line tool or partition manager is used to generate UUIDs to set or change a partition's UUID.

At step 2A, Share Data 1 is provided to Application 1 **(51).** At step 3, Application 1 via PKCS#11, establishes a session using Share Data 1 and creates objects. Objects are internally tagged with a T1 label. Later during application 1 execution, for example, at step 5, Application 1 re-establishes a session via PKCS#11 to read objects, and only application objects with T1 tag label may be accessed. Similarly, at step 2B, Share Data 2 is provided to Application 2 **(52).** At step 4, it establishes a session using Share Data 2 and creates objects, which are internally tagged with a T2 label. At step 4, Application 2 via PKCS#11, establishes a session using Share Data 2 and creates objects that internally tagged with a T2 label. Later during application 2 execution, for example, at step 6, Application 2 re-establishes a session via PKCS#11 to delete objects, and only application objects with T2 tag label may be accessed for such purpose.

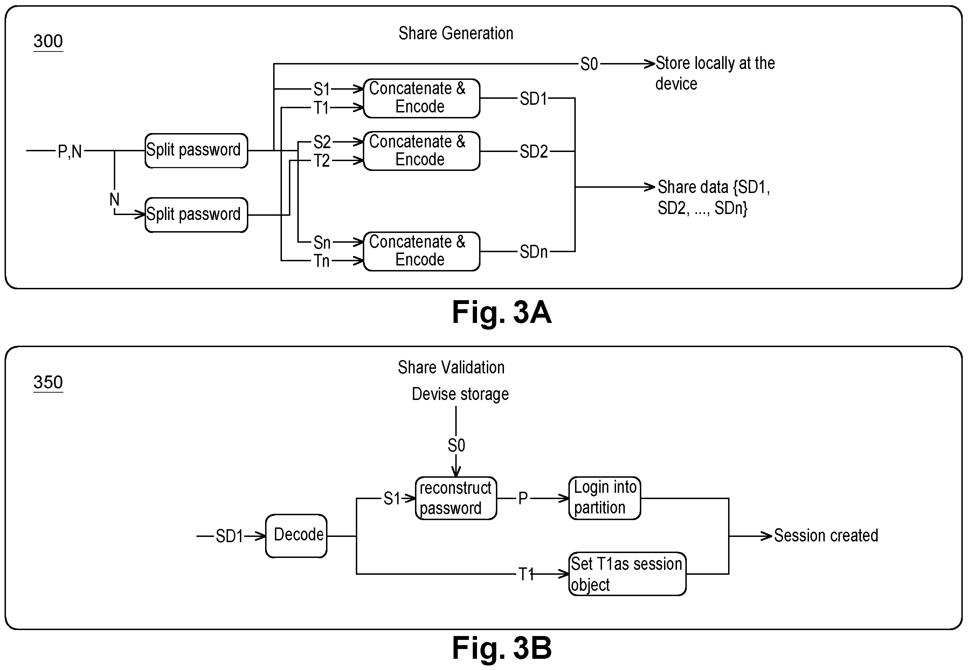

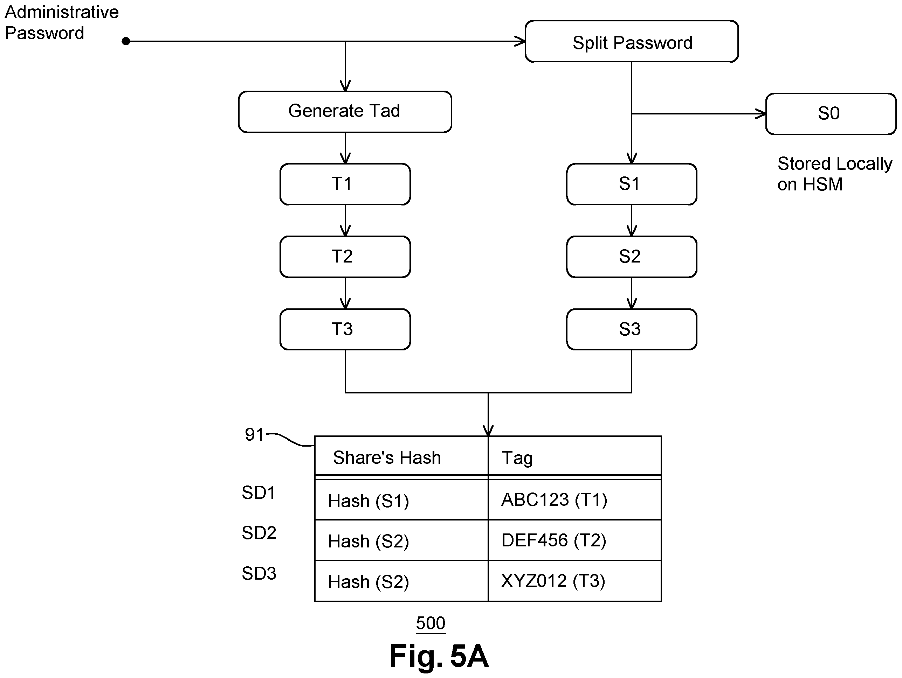

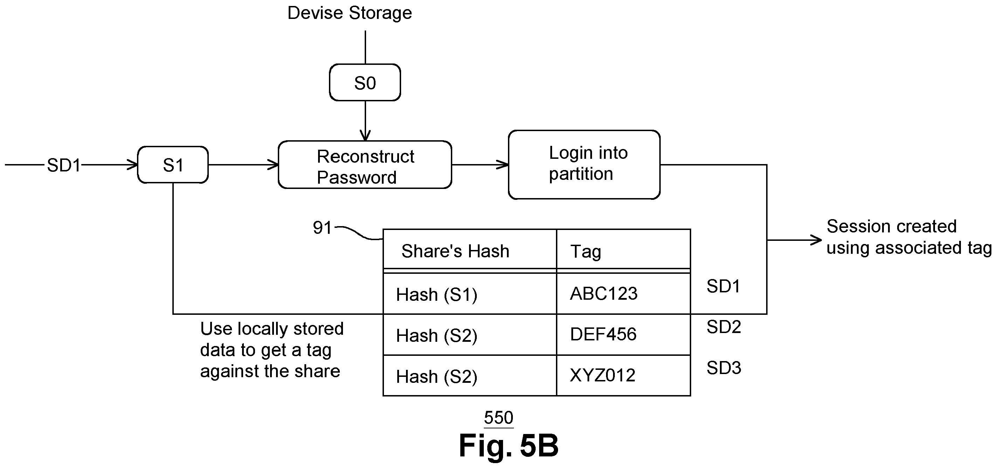

**FIG. 3A** depicts an exemplary method **300** for Share Generation by way of the SMS of **FIG. 2B** in accordance with some embodiments. The Share Generation method **300** relates to step 1 of FIG 2B, where the SMS **70** receives as input the password (P) and a number (N; also "n") of password shares to create. In some arrangements, the SMS receives this information included in a data packet sent to the HSM by way of the PKCS#11 interface API. In some arrangements, the information may be transmitted as part of an application packet data unit (APDU), for example, via a crypto officer smart card that communicates with the HSM. It splits the password using Shamir's Secret Sharing (SSS) algorithm into N password shares, labeled S0,S1, S2 ... to Sn. It generates a corresponding tag T1, T2 .... to Tn, for each password share per application. Notably, a Tag T0 is unnecessary since the S0 share is stored locally and not associated with any application. The SMS **70** then concatenates and encodes each password share (S1, S2...) and corresponding tag (T1, T2 ...) to produce a Share Data, for instance, SD1, SD2 ... to SDn. The format and use of the Share Data is described ahead in FIGs 5A and 5B.

**FIG. 3B** depicts an exemplary method for Share Validation 350 by way of the SMS of FIG. 2B in accordance with some embodiments. The Share Validation method 350 relates to steps 3-6 of FIG 2B, where after the applications **51/52** are provided with their Share Data (e.g. SD1, SD2 ..), the individual applications by way of PKCS#11 library establish a crypto session with the HSM for communicating crypto command requests to receive crypto responses from the HSM. As shown in **FIG 3B****,** each application will send its own Share Data to SMS, then SMS decodes it into its application-specific password share (e.g S1) and corresponding tag (e.g. T1). It will reconstruct that Partition (CO or CU) password from that application-specific password share (e.g S1) and the local share (S0) stored on the HSM. The SMS will then use the reconstructed Partition (CO or CU) password to log into the HSM for that session. The SMS will also set the application-specific tag (e.g. T1) for session objects during that session.

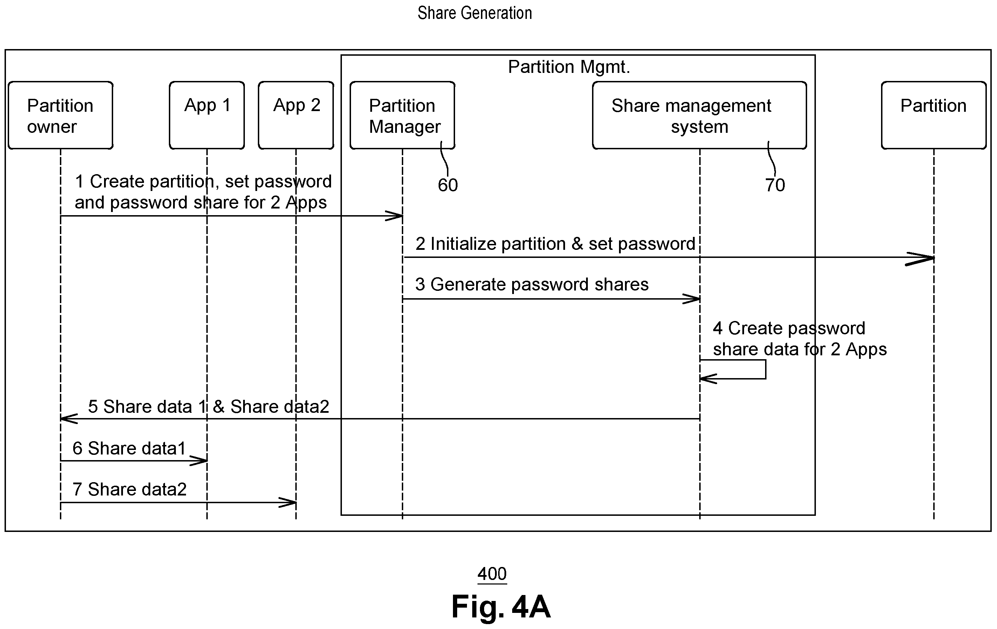

**FIG. 4A** is a sequence diagram **400** for the Share Generation and distribution process of application-specific password share and corresponding tag for an HSM 10 in accordance with some embodiments. The Share Generation process is where an application owner configures the HSM for logical separation of a same physical partition for hosting multiple applications and managing application objects using password shares. In this example illustration, two applications are considered for explanation, though more applications can be deployed in practice. Here, at step 1, the partition owner interfaces with the HSM and via PCKS11 API commands creates the partition and submits their password. At step 2, the Partition Manager **60** initializes the partition and sets the password for partition user (e.g. CO, CU) to access to the partition 74. Notably, the partition **74** expects and needs only the partition user (e.g. CO, CU) password. The SMS **70,** per request from the Partition Manger **60** at step 3, then creates the application-specific password shares for the two application using Shamir's Secret Sharing algorithm at step 4. It then generates Share Data for each application, for example, SD1 for application 1, and SD2 for application 2, and relay it to the partition owner at step 5. The partition owner then subsequently shares each application Share Data with the respective application, for instance, as shown in steps 6 and 7. For example, Application 1 receives only Share Data 1, and Application 2 receives only Share Data 2. Notably, whereas the partition user (e.g. CO, CU) password used to be shared with each application, here only a share required to reconstruct the partition password is shared. This intentionally prevents an application from logging into the partition as aPartition (CO or CU) user that could otherwise see and access all objects for all applications.

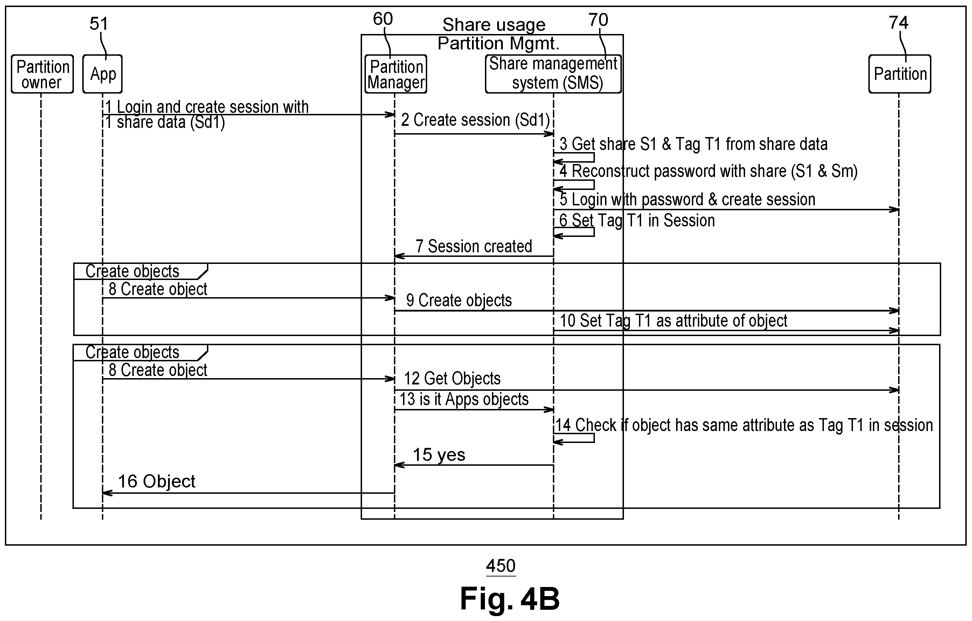

**FIG. 4B** is a sequence diagram **450** for object management with application-specific password share and corresponding tag for the HSM now configured for logical separation of a same physical partition for multiple applications and managing application objects using password shares and tag in accordance with some embodiments. Here, at step 1, the application **51** logs into the HSM and creates the session using the Share Data (e.g. SD1) it previously received during the Share Generation process **400** from the partition owner, or tenant, or client. The Partition Manager **60,** in order to create the session, passes this information onto the SMS **70** at step 2. The SMS **70** then gets the application-specific password share (e.g. S1) and application-specific tag (e.g. T1) at step 3 from the Share Data (e.g. SD1). Briefly, FIGs 5A and 5B described ahead, illustrate an exemplary Share Data format (e.g. Hash of password share + Tag) of the data packet contents. At step 4, the SMS **70** reconstructs the partition password with the application specific share (e.g. S1) and the locally stored share (S0). It then logs into the partition with the partition password to create the session for application 1 at step 5. At step 6, the SMS **70** sets the Tag (e.g. T1) to be used in the current session for objects created by that specific application. At step 7, the SMS **70** informs the Partition Manager 60 that the session has been created for the authenticated application.

Thereafter, when the application creates an object (step 8), the application will be directed to the Partition Manager to create the object (step 9), and the SMS **70** will set the application-specific tag (e.g. T1) as an attribute of the object when stored in the partition. The label will endure and is non-volatile; it will persist to other created sessions. Accordingly, all objects created and accessed during the session will be labeled with the application-specific tag. When the application need to read the object (step 11), the Partition Manager **60** upon receiving the read request, will get the object from the partition 74 (step 12). Before returning object access, it will inquire the SMS **70** as to whether the object attribute corresponds to the specific tag assigned to that session for the application (step 13), and then upon the SMS checking that the object has the same attribute as the assigned tag in the session (step 14), it will inform the Partition Manager that the object may be accesses (step 15), to which the Partition Manager **60** then grants access (e.g. read, write, delete) to that object (step 16).

**FIG. 5A** is a workflow diagram **500** for Password Share and Tag Generation of a method for cryptographic binding between an application share and corresponding tag in accordance with some embodiments. This is merely one exemplary approach to cryptographic binding and others are contemplated and supported in the same method framework. The cryptographic binding ensures the connection between the tag and the share, and is verified by the SMS **70** to ensure the tag belongs to the corresponding share. Here, the encoding (e.g., hash(S1) + T1; hash(S2) + T2) of the tag (e.g T1, T2, ...) and the password share (e.g., S1, S2, ...) per application is a mapping operation that computes a hash of the application share, and concatenates the hash with the application tag.

As shown, the workflow begins once the Partition password is provide. Once entered, the SMS **70** splits it into password shares (e.g. S1, S2, ...) using Shamir's Secret Sharing algorithm and corresponding tags (e.g. T1, T2, ...) are generated. The are concatenated together, for example, as shown via **91** table entry, where Share Data 1 (SD1) comprises the hash of password share (S1) and tag (T1), Share Data (SD2) comprises the hash of password share (S2) and tag (T2), and so on. The table 91 is stored locally by the SMS for later reference, when an application attempts to authenticate and create a session. At that time, when an application returns their Share Data to login to the partition, the SMS computes the hash of the share, and compares it against with the hash stored locally in this table 91.

The password share and tag generation for **FIG. 5A** is as follows. In Step 1, the password (P) is split into N shares using Shamir secret sharing algorithm. At Step 2, one share is stored as a master share (S00 at the HSM. At step 3, a share (S1) is provided to the requesting application, which will be used to reconstruct the password at login. At step 4, the hash of the share (S1) is computed, and at step 5, a unique tag (T1) is generated for share (S1). At step 6, the mapping between hash of the share (S1) and tag T1 is stored locally on device. This for example, corresponds to entry SD1 of table 91. Each application will have its own entry in the table.

**FIG. 5B** is a workflow diagram **550** for Share Validation and Object Tagging of the method of cryptographic binding of **FIG 5A** between an application share and corresponding tag in accordance with some embodiments. This is merely another exemplary approach to cryptographic binding and others are contemplated and supported in the same method framework. Here, after an application has been provided a Share Data, that application can authenticate to the HSM **10** for a session using that Share Data. Here as illustrated, for one example application, the Share Data (e.g. SD1) is decoded to retrieve the password share (S1). The SMS then reconstructs the partition password with that share (S1) and the locally stored share (S0), which is then used to log into the partition. The SMS also performs a hash (e.g. SHA512, etc.) of the share (S1) and refers to the locally stored entry table 91, to identify the tag associated with the password share. Here, for Application 1, includes S1 which is mapped to entry SD1 in the table 91 with a corresponding T1 tag of ABC123. Similarly, application 2, includes S2 which is mapped to entry SD2 in the table **91** with a corresponding T2 tag of DEF456.

The password validation for FIG. 5B is as follows. In Step 1, the SMS **70** computes the hash from the share (S1) received from application. In step 2, it verifies the computed hash is the same as a stored hash at device locally in view of the entry table **91.** At step 3, if the previous step succeed, share (S1) is validated. At step 4, the SMS reconstructs the administrative password using share S1 (received from the application) & the master (local) share (available at the device as S0). At step 5, the SMS by way of the Partition Manager logs into the assigned partition using the reconstructed administrative password. If successful, the SMS at step 6, in view of the entry table 91, uses the tag (T1) stored against the hash of the share (S1) to manage objects on the partition. Only objects associated with the Share Data with the corresponding tag for the application will be accessible.

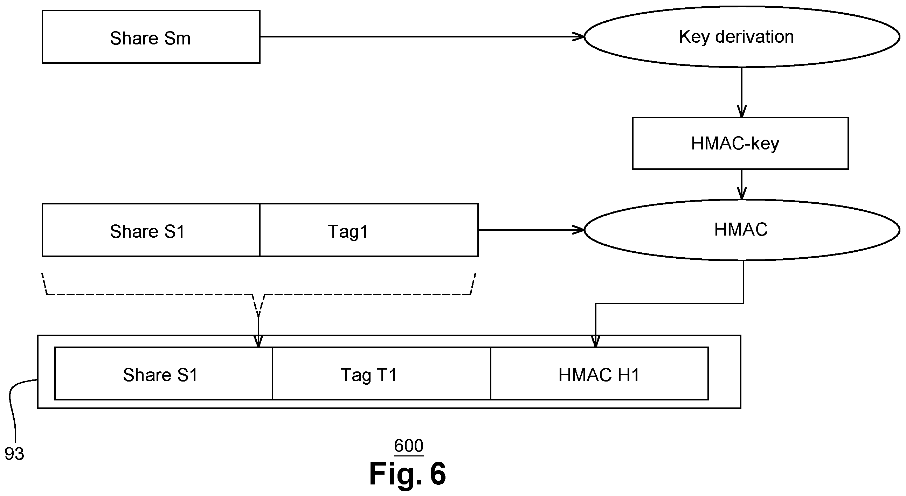

**FIG. 6** is a workflow diagram **600** of another method for cryptographic binding between an application share and corresponding tag based on HMAC in accordance with some embodiments. Here, the encoding (e.g., hash(S1) + T1; hash(S2) + T2) of the tag (e.g T1, T2, ...) and the password share (e.g., S1, S2, ...) per application is a cryptographic binding operation that calculates an HMAC of the application share plus application tag and then appends this HMAC to the Share Data before passed to the application. The HMAC is an alternate way to provide cryptographic binding of the application with its share and tag. The key required for HMAC can be either randomly generated one time and stored at the device, or the SMS can derive the key using the master share stored on the device. In the example of **FIG. 6****,** the master share is used to drive the HMAC-key.

The steps to generate and distribute a Share Data (e.g. SD1, SD2, ...) are as follows. In a first step, the password (P) is split into N shares using Shamir secret sharing algorithm. In step 2, one share is stored as master share (local share; S0) at the device. In step 3, the HMAC-key is derived using the master share. Each of these steps is repeated for each password share for each application. A unique tag (e.g. T1) is generated for each share (e.g., S1), and that share is concatenated with the tag (e.g. S1 & tag T1, i.e. (S1+T1). The SMS 70 then calculates the HMAC using the HMAC-key and the concatenated (optional encoding) (S1+T1) to produce HMAC H1. The SMS then appends the HMAC H1 to (S1+T1) to get the final share data for that application, for example, SD1 i.e. (S1+T1+H1)

The steps to validate a Share Data (e.g. SD1, SD2, ...) are as follows. In a first step, the SMS **70** retrieves the share (e.g. S1), the tag (e.g. T1) and HMAC from share data (e.g SD1). It then validates the share (S1) and tag (T1) pair by the following series of steps. It derives the HMAC-key using the master share, generates an HMAC of the concatenated data (S1+T1) using the HMAC-key, and then verifies the computed HMAC is the same as the received HMAC, for example, stored in an entry table 91. If the previous steps succeed, the SMS validates the share (S1) and tag (T1), and then reconstructs the partition password using the identified share (e.g. S1 received from application SD1) & master share (available at the device as S0). It then logs into the partition using the reconstructed partiton password. Thereafter, SMS 70 uses the tag T1 to manage application objects (e.g., keys, certificates, data, etc.) on the partition.

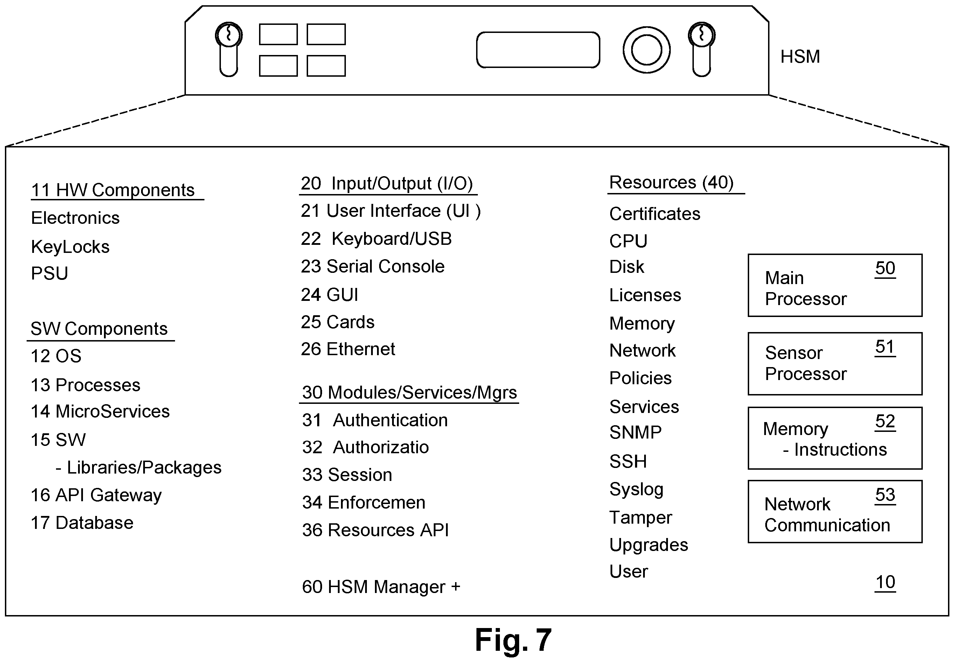

**FIG. 7** depicts exemplary components of a Hardware Server Module (HSM) **10.** The HSM **10** is a physical computing device that, among other capabilities, safeguards and manages digital keys, performs encryption and decryption functions for digital signatures, and provides for strong authentication and other cryptographic functions. It may exist in the form of a PCI plug-in card or an external hardware rack unit that attaches directly to a computer or network server within a data center. As a security hardened unit, the HSM **10** records tamper evidence, such as visible signs of tampering or logging and alerting, and provides for tamper responsiveness such as deleting keys upon tamper detection. The HSM **10** contains one or more secure crypto processor and sensor chips to prevent tampering and bus probing, or a combination of chips in a module that is protected by the tamper evident, tamper resistant, or tamper responsive packaging.

Operational use of the HSM **10** is primarily by way of the components shown in the figure, but understandably, many more components, electronics, and modules are present in a typical HSM. Those components shown are those mostly related, and suitable for use, for implementing the foregoing inventive methods. Hardware (HW) components **11** represent general electronics for operating the HSM (e.g., processors, central processing units, security, sensors, memory, network devices, ports, power supply units (PSU), wires, keylocks, etc.). The Hardware also contains memory to run operating system and input-output (I/O) devices for interaction. It comprises different types of processors, such as a crypto processor, sensor processor, general processing unit (GPU), central processing unit (CPU) to assist in protection, management of keys and hardware acceleration with the operating system. The keys, or any other data, can be stored in the database for persistence. The hardware architecture is designed to protect and manage digital keys, and can perform encryption, decryption, digital signature generation and verification.

The Operating System (OS) **12** is a software component that executes on top of hardware, for example, the general processor, to manage hardware resources and peripherals, run HSM jobs/processes, and help in execution of other processes **13.** Ubuntu is an exemplary OS that provides an embedded Linux distribution with libraries and packages. Ubuntu (GNU / Linux) is a multitasking Operating System capable of executing several processes (tasks) simultaneously. Different processes **13** for performing the HSM functions (data protection, key management, pin translations, etc.) are scheduled by the operating system **12.** A thread is the basic unit to which the operating system allocates processor time. A process **13** is an instance of a computer program that is executed by one or many threads in the GPU or CPU. One or more threads run in the context of the process. A thread can execute any part of the process code, including parts currently being executed by another thread.

Certain HSM functionality and capabilities are configured as micro-services. Micro-services are independent and lightweight processes designed to perform specific tasks. They are typically handled and managed within the HSM by way of the OS **12.** Micro-services **14** can communicate with each other and with external systems over specialized protocols and application programming interface (API) **16.** Micro services are built using software libraries/packages **15,** which are a self-contained set of independent and interchangeable software component that implement a specific functionality. Micro-services **14** and Processes **13** are built using these software libraries/packages **15.** By way of these microservices, applications can implement a third-party Microservice provider's generic API to a service to deliver HSM capabilities. In this manner, for example, a 3^{rd} party customer by way of APIs can partition their workload to optimized HSMs for performing specific tasks (e.g. ECC/RSA key gen, message signing, etc.) according to their microservice model.

The Applications Programming Interface (API) gateway **16** provides a connection between computers or between computer programs/applications, and/or between computers and people. It is a type of software interface, offering a service to other pieces of software. The API provides a communication channel between HSM components, internal processes **13** and/or micro services **14.** These APIs are exposed on top of input/output (I/O) **20** interfaces. External systems and/or people communicate with HSM via the I/O interfaces **20,** such as user interface (Ul) **21.** The HSM can also communicate with external systems through hardware IO interfaces, such as the keyboard **22,** serial port **23,** Ethernet, optical ports, USB ports, etc. External systems (host computers in a data center) can also talk to HSM software interface via APIs exposed on top of individual hardware interfaces (e.g., network device driver, disk/memory management, etc.)

In some embodiments an electronic hardware sub-system within the HSM 10 provides tamper response against physical and logical attacks against the HSM. The electronic hardware sub-system comprises a Main Processor (MP) 50 running an operating system (OS) that produces virtualized HSM instances (vHSMs) per tenant using virtualization technologies that are one among containers or micro Virtual Machines (uVMs) running crypto services logic; a Sensor Processor (SP) 51 communicatively coupled to said MP over a PCIe communication channel to provide tamper handling against physical and logical attacks of said virtualized HSM instances on said HSM; and an HSM Partition Manager 60 executing in said MP to manage and orchestrate said vHSMs for the aforementioned operations. The MP 50 and SP 51 are distinct hardware devices that each can include one or more Central Processing Units (CPUs) and memory coupled to the one or more CPUs where the memory includes computer instructions which when executed by the one or more processors causes the one or more processors to perform the operations above (e.g., key splitting, key sharing, object memory management, etc.), and as related to fraud analysis, threat detection, and tamper management.

The HSM **10** includes a local console **23** that is serial connected over e.g., a USB-C interface. The serial interface can be used by operations personnel, namely operators, referred to as DCOps (standing for Data Center Operations), who have physical access to the HSM for manually issuing commands to the HSM. Such USB-C interface is used, according to the standing state of the art, for all configuration throughout the HSM service, including initial configuration and cumbersome provisioning processes. The HSM also includes managerial Graphical User Interface (GUI) **24** that over an Ethernet **26** connection allow for remote configuration of the HSM. Also, the I/O **20** can be used to configure network settings, SSH certificates, upgrades, licenses and devices (e.g. CPU, Disk, memory,etc.). Operator (Java) cards **25** also provide a means for provisioning and securing the HSM using key shares and key splits.

The HSM also includes services **30** by way of modules, processes and service managers. Some services may be internal to the HSM, and others may be selectively exposed via the API gateway **16** to external entities or services. Examples of services **30** include authentication **31,** authorization **32,** session manager **33,** enforcement **34,** resource API manager **36,** and HSM Manager **60,** where the + (plus sign) denotes inclusion of other components previously described in the HSM. Accordingly, service managers can be invoked/managed/configured remotely (external) via their APIs, for example, from a web based GUI (e.g. Crypto Command Center) via Internet connection over Ethernet to the HSM **10.**

The HSM also includes (internal) resources **40** which can be externally configured via the normal I/O interfaces **20,** and also, for some, (internally and externally) via any of the module/service managers **30** and their respective APIs. Examples of HSM resources include, but are not limited to, certificates, licenses, policies, device management, services, upgrades and so on. Each resource **40** has a respective API for software modules, processes or microservices to interact with the respective resource. The HSM offers access and services to each resource **40** via the resources API **36.** Aside from HSM related tasks (e.g. encryption/decryption, key management, etc.), this includes: certificate/license management, SNMP, SSH, memory management/configuration, network management/configuration, upgrade installations/services, user resources, and so on.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable medium 322 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

The term "machine-readable medium" shall accordingly be taken to include, but not be limited to: solid-state memories such as a memory card or other package that houses one or more read-only (non-volatile) memories, random access memories, or other re-writable (volatile) memories; magneto-optical or optical medium such as a disk or tape; and carrier wave signals such as a signal embodying computer instructions in a transmission medium; and/or a digital file attachment to e-mail or other self-contained information archive or set of archives is considered a distribution medium equivalent to a tangible storage medium. Accordingly, the disclosure is considered to include any one or more of a machine-readable medium or a distribution medium, as listed herein and including art-recognized equivalents and successor media, in which the software implementations herein are stored.

In the above-description of various embodiments of the present disclosure, aspects of the present disclosure may be illustrated and described herein in any of a number of patentable classes or contexts including any new and useful process, machine, manufacture, or composition of matter, or any new and useful improvement thereof. Accordingly, aspects of the present disclosure may be implemented in entirely hardware, entirely software (including firmware, resident software, micro-code, etc.) or combining software and hardware implementation that may all generally be referred to herein as a "circuit," "module," "component," or "system." Furthermore, aspects of the present disclosure may take the form of a computer program product comprising one or more computer readable media having computer readable program code embodied thereon.

Any combination of one or more computer readable media may be used. The computer readable media may be a computer readable signal medium or a computer readable storage medium. A computer readable storage medium may be, for example, but not limited to, an electronic, magnetic, optical, electromagnetic, or semiconductor system, apparatus, or device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable signal medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Scala, Smalltalk, Scheme, Go, C++, C#, VB.NET, Python or the like, conventional procedural programming languages, such as the "C" programming language, Perl, PHP, dynamic programming languages such as Python, Ruby and Groovy, or other programming languages. The program code may execute entirely on the user's computer, partly on the user's computer, as a stand-alone software package, partly on the user's computer and partly on a remote computer, entirely on the remote computer or server, or within the Cloud or other computer network. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS), Platform as a Service (PaaS) for connecting mobile apps to cloud based services, and Security as a Service (SECaas).

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

**1.** A Hardware Security Module (HSM) (10) configurable for logical separation of a same physical partition for multiple applications and managing application objects using password shares comprising:
one or more Central Processing Units (CPUs) and memory coupled to the one or more CPUs where the memory includes computer instructions which when executed by the one or more processors causes the one or more processors to perform the operations of:
for Share Generation (400),
a Partition Manager (60) for
creating a partition in memory responsive to receiving an partition (CO or CU) password used by a PKCS #11 standard for authenticating applications to execute in the HSM;
setting access to the partition according to the partition (CO or CU) password;
a Share Management System (SMS) (70) communicatively coupled to the Partition Manager for
generating Share Data (91) for the applications by:
splitting the partition (CO or CU) password into multiple shares using Shamir's Secret Sharing algorithm;
storing one share of the multiple shares as a local share on the HSM;
generating tags for other shares of the multiple shares;
concatenating and encoding tags and shares per application to produce Share Data specific to each application; and
distributing each Share Data to each of the applications,
for Share Validation (450),
the Share Management System (SMS) (70) for
decoding the Share Data for an application into an application tag and an application share;
reconstructing the partition (CO or CU) password from the application share and local share stored on the HSM;
logging into the partition using the partition (CO or CU) password;
creating an authenticated session for the application;
setting the application tag for application objects created in memory by the application;
providing authorized applications with access only to application objects with their corresponding application tag; and
restricting access to application objects in the partition with different application tags of different authenticated applications also accessing the same partition,
wherein a partition password is a Crypto Officer (CO) or Crypto User (CU) password required by the PKCS #11 standard in order to authenticate the CO or CU to the partition.

**3.** The HSM of claim 1, wherein the application tag is saved as an attribute of the application object when stored in memory, and, wherein the application object is one among a data object, a key object, a certificate object or vendor-defined object.

**4.** The HSM of claim 1, wherein
responsive to a create object command from an application, the Partition Manager creates the application object in the partition, and the SMS sets an application tag as an attribute of the application object; and
responsive to a read object command from the application, the SMS checks the application object has the attribute corresponding to the application tag set for the authenticated session of the application.

**5.** The HSM of claim 1, wherein Shamir's Secret Sharing algorithm is "M of N" where M is the number of applications so that each application will have its own share, and N is at least two so that any one application share and the local share can reconstruct the partition password.

**6.** The HSM of claim 1, wherein the encoding of a tag and a share per application is a mapping operation that computes a hash of the application share, and concatenates the hash with the application tag.

**7.** The HSM of claim 1, wherein the encoding of a tag and a share per application is enforced by a cryptographic binding operation.

**8.** The HSM of claim 7, wherein for cryptographic binding the HSM calculates an HMAC of the application share plus application tag and then appends this HMAC to the Share Data before passed to the application.

**9.** The HSM of claim 1, comprises a Main Processor (MP) (50) running an operating system (OS) that produces virtualized HSM instances (vHSMs) (61/62) per tenant application using virtualization technologies that are one among containers or micro Virtual Machines (uVMs) running services logic.

**10.** A method suitable for configuring a Hardware Security Module (HSM) (10) with logical separation of a same physical partition for multiple applications and managing application objects using password shares, the method comprising steps:
for Share Generation (400),
by way of a Partition Manager (60),
creating a partition in memory responsive to receiving an partition password used by a PKCS #11 standard for authenticating applications to execute in the HSM;
setting access to the partition according to the partition password;
by way of a Share Management System (SMS) (70) communicatively coupled to the Partition Manager,
generating Share Data (91) for the applications by:
splitting the partition (CO or CU) password into multiple shares using Shamir's Secret Sharing algorithm;
storing one share of the multiple shares as a local share on the HSM;
generating tags for other shares of the multiple shares;
concatenating and encoding a tag and a share per application to produce Share Data specific to each application; and
distributing each Share Data to each of the applications,
for Share Validation (450),
by way of the Share Management System (SMS) (70),
decoding the Share Data for an application into an application tag and an application share;
reconstructing the partition password from the application share and local share stored on the HSM;
logging into the partition using the partition password;
creating an authenticated session for the application;
setting the application tag for application objects created in memory by the application;
providing authorized applications with access only to application objects with their corresponding application tag; and
restricting access to application objects in the partition with different application tags of different authenticated applications also accessing the same partition,
wherein a partition password is a Crypto Officer (CO) or Crypto User (CU) password required by the PKCS #11 standard in order to authenticate the CO or CU to the partition.

**11.** The method of claim 10, wherein the application tag is saved as an attribute of the application object when stored in memory, and, wherein the application object is one among a data object, a key object, a certificate object or vendor-defined object.

**12.** The method of claim 10, wherein
responsive to a create object command from an application, the Partition Manager creates the application object in the partition, and the SMS sets an application tag as an attribute of the application object; and
responsive to a read object command from the application, the SMS checks the application object has the attribute corresponding to the application tag set for the authenticated session of the application.

**13.** The method of claim 10, wherein Shamir's Secret Sharing algorithm is "M of N" where M is the number of applications so that each application will have its own share, and N is at least two so that any one application share and the local share can reconstruct the partition password.

**14.** The method of claim 10, wherein the encoding of a tag and a share per application is a mapping operation that computes a hash of the application share, and concatenates the hash with the application tag.

**15.** The method of claim 10, wherein the encoding of a tag and a share per application is enforced by a cryptographic binding operation.
